# EUROPEAN PATENT APPLICATION

(11) **EP 2 146 289 A1**
(43) Date of publication of application: **20.01.2010**
(21) Application number: 08075635.6
(22) Date of filing: 16.07.2008
(51) Int. Cl.: G06F 17/30, G06K 9/00

(54) **Capturing, storing and individualizing images**

(71) Applicant: Visionware B.V.B.A., 8540 Deerlijk (BE)
(72) Inventor: Lorrez, Wesley, 8540 Deerlijk (BE)
(74) Representative: Marchau, Michel F.L.A.

(57) **Abstract**

A system for producing a video product on an individual moving around in one or more locations, the system comprising:
- a video capturing and recording system (100,200), each video capturing and recording system comprising:
a detector for detecting the face of the individual and for detecting identification features of the individual, storing means for storing the identification features or a corresponding code,
means for determining track information regarding the individual and in relation to the location,
one or more cameras (120) for shooting one or more subsequences of images of the individual on the basis of the track information,
means for putting the sub-sequences of images together into a sequence of images,
means for labelling the sequence of images with the identification of the individual.

## Description

### Technical field of the invention

The present invention relates generally to the field of capturing images and personalizing the captured images. More specifically, the present invention relates to the field of image capturing in places like entertainment or holiday parks, theme parks, places for particular games, etc. whereby the captured images and image sequences are to be linked to one or more individuals. The present invention relates also to the adding of images of any kind to a given image sequence. The present invention is particularly, but not exclusively, useful for all kinds of applications of image capturing in public places and in other places, visited by a larger number of people.

### Background of the invention

Visitors to entertainment and holiday parks, bowlings, fairs, parties, etc. often want to get a materialized souvenir of their visit like photos, films, etc. But it is not always easy to make photos or films when the visitor himself is participating in a particular attraction or game. The visitor has then to find a third person willing to help him, but this person is often not familiar with the photographing or filming apparatus of the visitor. Asking professionals for taking photos or shooting films is also rather an expensive solution. There have been a number of proposals to find other solutions to this problem e.g. by installing in the attraction area a number of automatic cameras, shooting films of the visitors. In order to make the necessary link between a given film sequence and one or more individual visitors, it has already been proposed to provide each visitor with an identification card. The visitor can introduce his identification card in a reader or the identification card may be detected e.g. by a RFID-reader, installed in the neighbourhood of a particular attraction. One or more cameras, positioned close to that attraction, start shooting one or more film sequences of the visitors enjoying the attraction. The film sequences are provided with an identification signal, corresponding to the information on the identification card so that film sequences from the same attraction or from different attractions can be linked with a particular visitor. The images of one or more film sequences, with the same identification, may then be joined together into a single video, which can be obtained by the visitor concerned. Such a system is disclosed in e.g. US 5 655 053 and in US 5 576 838. However, such systems present a number of inconveniences. From the entry in the park, the visitor has to show his interest in a video and he has to ask for an identification card. He has to present his identification card at each attraction of which he wants a video sequence. The identification card can be lost or the visitor can forget to introduce the card in a card reader. An effect of surprise is also excluded because the visitor knows where and when a film will be made.

A first possibility of improving the system consists in an automatically filming of all visitors at different locations of the park and putting the different film sequences containing images of a particular visitor together by using facial recognition of that visitor. Using such a technique makes it possible to obtain a video of the visit to the park relating to a particular visitor. Such a system presents however the drawback that the visitor has not always his face directed to the camera or his face may be changing while he is e.g. laughing, etc. so that it may be difficult to use facial recognition at certain moments, in particular when visitors are participating in an attraction. Further it may also be desirable to make use of computer vision algorithms e.g. for inserting other images within the video sequences. Indeed, there is an increasing need to provide such videos with stronger personal characteristics and also with virtual images, the content of which may be influenced by the principal character or characters of the video. Such virtual images may relate to the themes of the visited park or to certain typical figures of the park. Very generally, there is a need to create the possibility to persons or other living beings and even objects to influence virtual images which are inserted into a video containing images of these persons or living beings or objects.

### Summary of the invention

It is an object of the present invention to provide a method and a system wherein the drawbacks and inconveniences, mentioned above, are eliminated. It is also an object of the present invention to provide in a method and a system for producing a video by using more than one identification of an individual, one identification being used for the whole video and a special identification being used at the different locations of capturing parts of the video. It is also an object of the present invention to provide a method and a system whereby a person or another living being or an object can influence or determine the content of the images which are added to a video of that person or living being or object.

The above objective is accomplished by a method and device according to the present invention.
The present invention provides a method for producing a video product regarding an individual, the video product being based on at least one video sequence, each video sequence comprising one or more sub-sequences of images. The method comprises detecting and storing an identification or a corresponding code (ID) of the individual, valid for all video sequences, determining track information, linked with the identification (ID) and valid for all sub-sequences within a given video sequence, shooting and storing sub-sequences of images of the individual, mounting the sub-sequences of images corresponding to a single track information into a video sequence and labelling the video sequence with the identification or corresponding code (ID) and mounting video sequences of images having the first identification into the video product.
The identification may be based on facial recognition.
The video sequences may be analyzed and a score, based on that analysis, may be given to each video sequence. This analysis may be directed to an attitude or a movement of the individual or to the general quality of the images.
The sequences may be selected on the basis on the given score.
The sequences may be further analyzed for particular information. Such particular information may be contained in an attitude or a movement of the individual.
Virtual content may be selected and added based on the results of the further analysis for particular information.
The present invention provides also a video product, obtained by applying one of the methods described above.
The present invention provides further a computer software product, which, when loaded on a computer, makes this computer execute any of the methods described above.
The present invention provides further a system for producing a video product regarding an individual moving around in one or more locations. The system comprises, in at least one location, a video capturing and recording system, whereby each video capturing and recording system comprises a detector for detecting the face of the individual and for detecting identification features of the individual, storing means for storing the identification features or a corresponding code, means for determining track information regarding the individual and in relation to the location, one or more cameras for shooting one or more sub-sequences of images of the individual on the basis of the track information, means for putting the sub-sequences of images together into a sequence of images, and means for labelling the sequences of images with the identification of the individual.
The system may further comprise a video combining system which comprises a detector for detecting the face of the individual and for detecting identification features of the individual and means for retrieving among the available sequences the sequences, labelled with the identification of the individual.
Each video capturing and recording system may further comprise a means for analyzing the sequences for particular characteristics and means for labelling the sequences with a score, based on the results of this analysis.
The video combining system may further comprise means for selecting sequences on the basis on their score.
The video combining system may further comprise means for analyzing the sequences for particular information.
The video combining system may further comprise means for selecting and adding virtual content to one or more video sequences based on the presence of particular information.
Very general, the present invention provides also a method for adding virtual content to images of a video sequence. The method comprises the steps of detecting a particular information in the images of an individual or an object contained in the video sequence and, when such a particular information is detected, adding the virtual content to the images of the video sequence.
According to the method, the added virtual content is determined by the content of the image.
The particular information in the image may be constituted by a change in the expression of a face.
The particular information in the image of the individual may be constituted by a particular movement of the individual.
In the case of an object, the particular information may be constituted by the way the object is seen in the image, by the form of the object or the movement of the object. The virtual content may comprise the image of a personage.
The method may further comprise modifying the content of the virtual content, this modifying being determined by detecting further particular information in the images contained in the video sequence.
Modifying the virtual content may comprise modifying the expression on the face of the personage.
Modifying the virtual content may comprise inducing a movement of the personage. The present invention provides also a DVD comprising a video reportage of an event whereby the video reportage is obtained according to any of the methods above.
The present invention provides also a computer program product, directly loadable into the memory of a computer, comprising software program portions for executing any of the methods above, when said computer program product is run on a computer.
The present invention provides also a video system for adding virtual content to images of a video sequence. The video system comprises detecting means for detecting a particular information in the image of an individual or an object contained in the video sequence and adding means for, when such a particular information is detected, adding virtual content to the images of the video sequence.
The detecting circuit may comprise means for facial recognition.
The video system may comprise means for determining the virtual content on the basis of the detected particular information.
The video system may comprise means for modifying the virtual content based on the detection of further particular information in the images of an individual contained in the video sequence.
The present invention is not limited to the combination of the different features and characteristics, described in this summary of the invention, but other combinations and even features and characteristics on their own are also object of the present invention.

### Description of illustrative embodiments

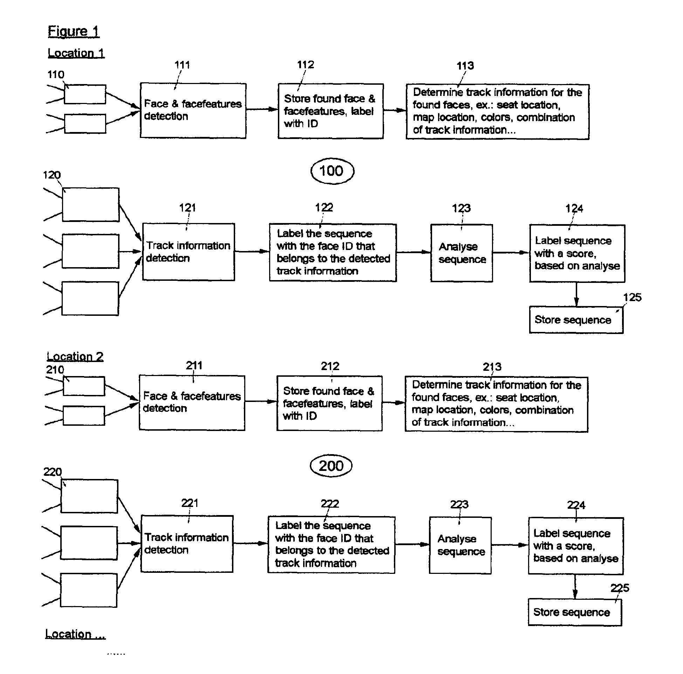

The invention is further described by way of examples with reference to the accompanying drawings wherein
Figure 1 represents schematically examples of a video capturing and recording system, installed in the neighbourhood of an attraction in an entertainment park;

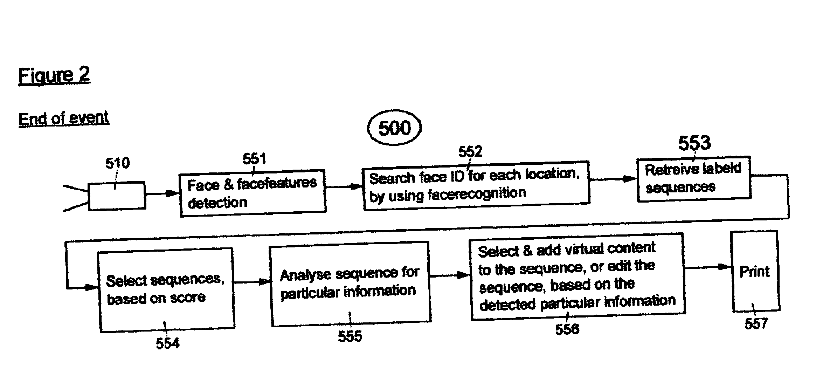

Figure 2 represents schematically a video combining and editing system, normally installed in the neighbourhood of the exit of an entertainment park.
Figure 3 represents schematically an example of how images, called further virtual content, may be prepared.
Figure 4 represents schematically an example of the way virtual content is selected and added to other images, e.g. the images obtained by the video capturing and recording system of Figure 1.

The present invention will be described with respect to particular embodiments and with reference to the drawings but the invention is not limited thereto but only by the claims. The drawings described are only schematic and are non-limiting.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used, but it should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of steps of a method that can be implemented by a processor of a computer system or by other means of carrying out the function. Thus, a processor with the necessary instructions for carrying out such a method or element of a method forms a means for carrying out the method or the element of a method. Furthermore, an element of an apparatus embodiment described herein is an example of a means for carrying out the function performed by the element for the purpose of carrying out the invention.

In the description provided herein, numerous specific details are set forth. However, it is understood that embodiments of the invention may be practised without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

In the description provided herein, numerous specific details are set forth. However, it is understood that embodiments of the invention may be practised without these specific details. In other instances, well-known methods, structures and techniques have not been shown in detail in order not to obscure an understanding of this description.

Before starting the detailed description, the following definitions are given:
**a sub-sequence** (of images): a film or video comprising images taken by a camera;
**a sequence** (of images): a film or video product, obtained by combining the images of different sub-sequences; in extreme cases, a sequence may comprise only the images of a single sub-sequence but normally, a sequence comprises images taken by different cameras;
**a video:** a film or video product, obtained by combining the images of different sequences; in extreme cases, a video may consist of one sequence.
**virtual content:** any kind of images, computer generated, cartoons or real images, which, when added to other images, normally representing the real world, create a virtual world, no longer corresponding completely to reality;
**individual:** one or more human beings, e.g. a family; other living beings, like animals are also included;
**(automatic) identification:** any kind of identifying an individual by using certain characteristics of the individual e.g. facial characteristics, other physical characteristics like height, etc., characteristics linked with the individual like clothes, position of the individual, etc.
**track information:** any kind of information relating to an individual, allowing an image processing system to decide whether a sub-sequence or sequence of images contain images relating to an individual. The track information can e.g. be based on the position of the individual in a transport means, carousel (e.g. second row in a boat), other information allowing to identify the individual (e.g. a red jacket, person with a dog), etc. The track information can also use characteristics which could be used in the identifying, but the characteristic, used as track information is different from the one used at that moment for the identifying. Track information can also be called a second identification.
These definitions are valid for the present description and also for the claims.

As a first example, a description will be given of a complete system in which the present invention can be applied. In particular, this example, illustrated in the drawings, relates to an attraction park. But it is clear that the invention is not limited to such an application but, as already said above, other applications are also encompassed by the invention.

Normally, an attraction park, a theme park, etc. has different attractions and other places of interest (like restaurants, terraces, panoramic views, etc), each of them being particular suited for video shooting. All such places and attractions are called hereafter locations. In order to create the possibility of providing visitors of the park with a video of their visit, each location in the park is normally provided with a video capturing and recording system (in the drawing: 100, 200, etc.). A video combining and editing system (500) is situated in the neighbourhood of the exit of the park. The video capturing and monitoring systems, which are situated at different locations within the park (e.g. an attraction, a game, etc.) have a plurality of cameras. In the drawing, each video capturing and recording system 100, 200,etc. is illustrated as one unit, the different elements being directly connected one to the other. It is clear that some elements of a video capturing and recording system may be grouped with elements of another video capturing and recording system. It is also possible to centralize some or all of the different steps foreseen in the video capturing and recording systems (e.g. analyzing, storing, labelling) in a central computer system whereby data are to be transmitted between the decentralized video capturing and recording systems and the central computer.

A more detailed description is now given of an exemplary video capturing and recording system e.g. system 100, which is installed around a location with a splash ride attraction. One or more of the cameras (110) are so situated that they are supervising the embarkation station of the attraction and the other cameras (120) are situated along the track of the splash ride. The cameras (110) at the embarkation station take one or more images of a visitor V. From this image a first identification (ID) of the visitor is deducted (111), e.g. some facial characteristics and these characteristics are stored (112). It is also possible to link these characteristics with a code, representing these characteristics and store the characteristics and/or the code in a central memory so that at any time from the code the characteristics can be deducted and vice versa. At the same time, some track information is determined for the identified visitor (113), which in case of the splash ride can be e.g. the position of the visitor V in a boat, e.g. the second row. During the boat ride, sub-sequences of images are taken by cameras (120). The track information can be used to control the different cameras (120) so that they follow the visitor V during the attraction. Another possibility consists in using the track information for labelling the sub-sequences, taken at the splash ride attraction and containing images of visitor V, with a code, representing the track information. The sub-sequences relating to visitor V are put together in a single sequence relating to the splash ride attraction and are labelled (122) with the identification signal (ID) corresponding to the first identification signal which is unique and indicates that the video sequence contains images of visitor V The sequence together with the first identification information (ID) is then stored. Information identifying the visited attraction may also be stored on the same video sequence. It is also possible to make an analysis (123) of the images of this video sequence, linked with this attraction. Such an analysis may be directed to the quality of the images, e.g. images showing the visitor looking straightforward in a camera or to a particular behaviour of the visitor e.g. for detecting the images where visitor V shows strong emotions, fear or cheer, or to any other analysis criteria. On the basis of this analysis, a score (124) may be given to certain images indicating the quality of the image or the suitability of the image to be further processed, etc.

The same process is repeated at other locations of the attraction park whereby, possibly, another track information is used, e.g. the colour of the jacket of visitor V, the position of visitor V in another attraction, the height of the visitor, etc.. In this way, a number of sequences of visitor V are obtained. At each location the identification of visitor V is repeated so that all these sequences are labelled with an identification corresponding to the first identification (ID) of visitor V. Each of the sequences consists of one or more sub-sequences, obtained on the basis of a corresponding track information.

At the end of the visit of the attraction park, there are a number of video sequences containing images of visitor V. In the neighbourhood of the exit of the attraction park or in any other suitable place, a video combining and editing system (500) is installed. It is to be understood that parts of this video combining and editing system may also be realized in a central computer system. The video sequences are sent to the video combining and editing system using well-known techniques, e.g. data transmission. The video combining and editing system comprises a camera or cameras (510) used for making one or more images of visitor V. The system further comprises a circuit for face detection and detection of face features (551) in order to deduct from the images again the identification (ID) of visitor V. On the basis of this identification, the stored sequences, labelled with this identification or its corresponding code are retrieved (553). A selection or ranking of the sequences may be done on the basis of the score given in the different video capturing and recording systems at different locations (554).

The video combining and editing system may also comprise an editing circuit, in which the images of the sequences may be adapted or improved e.g. taking away a shadow on a face or brighten the teeth of a person, applying a sepia filtering, etc.

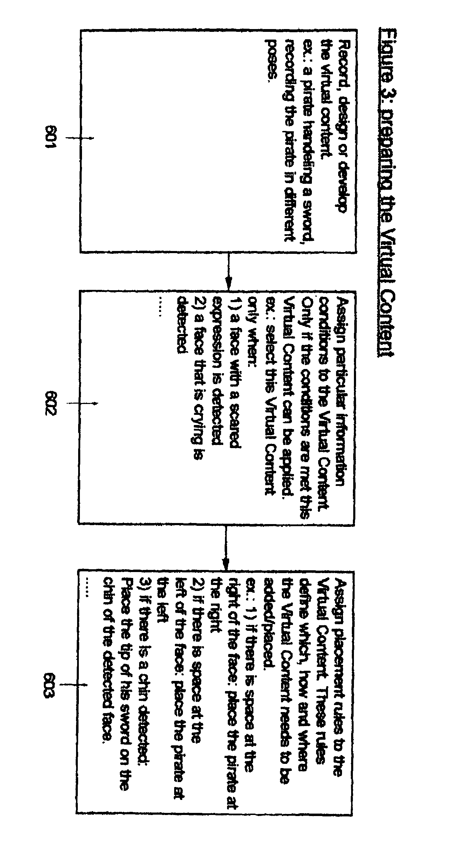

If it is the intention to select and add virtual content to the real images, obtained by one or more video capturing and recording systems, this virtual content is to be prepared. A general method for preparing such virtual content is shown in Figure 3 and comprises the following steps:
- in a first step (601), images to be used in the virtual content are recorded, designed or otherwise developed (e.g. a pirate, handling a sword, recording a pirate in different poses);
- in a further step (602), particular information conditions are assigned to the different images of the virtual content or to the different sequences of images of the virtual content i.e. under which conditions a given image of the virtual content will be selected (e.g. the pirate handling a sword will be selected when a face with a scared expression is detected in a real image);
- in a final step, placement rules are assigned to the virtual content images (603) i.e. rules defining how and where the virtual content images are to be placed in real images (e.g. if there is space available at the right or left of a face in that other image, put the pirate at the right, respectively at the left of that face; if a chin is detected, put the tip of the sword of the pirate on the chin of the face).

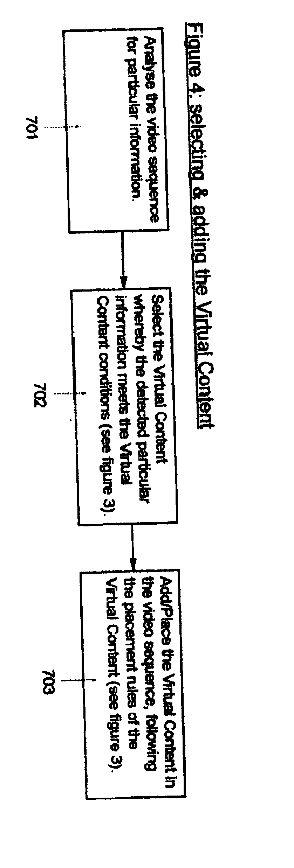

In order to add virtual content to one or more video sequences, the real images are analysed for particular information (555), corresponding to the particular information conditions assigned during the preparation of the virtual content (602). Examples of such particular information are: how is the visitor reacting to a particular attraction or to different events (e.g. is he laughing, is he cheering, is he throwing his arms in the air, etc.), how is the visitor reacting to his environment (e.g. is he shaking hands, etc.). On the basis of this analysis virtual content may be selected and added with the real images (556). Figure 4 illustrates an exemplary method how such a selection and such an addition can be done. The method may contain the following steps:
- analyzing the video sequence for particular information in the images of the visitor V (555, 701) e.g. is the visitor laughing, is he crying, is he throwing his arms in the air, etc.;
- selecting virtual content (702) on the basis of the detected particular information and the corresponding conditions, assigned during the preparation of the virtual content ;
- add and place the virtual content in the video sequence (703) on the basis of the placement rules, assigned to the virtual content images.
The video may then be made available under any suitable form, e.g. a DVD (557).

The added virtual content may relate to certain themes of the park or to the visited attractions. In the case of the splash ride, the virtual image may represent e.g. Sinbad the Sailor, sitting or staying on the boat behind visitor V. For other attractions, other virtual personages may inserted in the video sequence e.g. Cinderella, Mickey, etc. The system may comprise also the necessary software so that these virtual personages can react to different attitudes or actions of the visitor V in the video sequence: e.g. they may laugh when the visitor is laughing, throw their arms in the air when the visitor is throwing his arms in the air, start a feigned attack when the face of the visitor expresses fear, walk with the visitor when he starts walking, etc. After being processed in this way, the different video sequences are mounted into a single video, whereby this video may also contain further general video fragments of the whole park or detailed video fragments of one or more attractions. In this way a personalized video is obtained containing images of the visitor on one or more attractions and interacting with one or more virtual personages or other living beings like animals.

Another example of application of the present invention can be found in a video registration of the attendance at a particular party. Images of a particular person may be taken at different locations of the party in order to get a number of sequences, which may then be combined into a video. The video sequences of the real party may be mixed with virtual images whereby the effect can be obtained of participants of the party, discussing with one or the other virtual personage like Laurel or Hardy, whereby the attitude and/or action of the virtual personage is influenced by the attitude and/or action of one or more of the participants of the party.

A further example of application of the present invention is in the area of active sport, e.g. diving. Diving schools often provide the divers with a video of their diving experience. Such a video can be processed in order to include in the images Neptune, the god of the sea, with his trident with as result a virtual discussion between the diver and Neptune. Or a virtual meeting between the diver and one or more mermaids can be arranged. Also in this application the diver may influence, often without realizing it, the kind of virtual image inserted in the video (Neptune or a mermaid) and the behaviour or reaction of the person in the virtual image.

In the examples given above, virtual content is added to images of human beings. However, the same process of adding virtual content to a video sequence may also be used for adding virtual content to real images of an animal and, very generally, the present invention covers also the adding of virtual content to real images of objects. In the case of objects, particular information may be constituted by the way the object is seen in the image (e.g. when the image shows a top view of a table, a virtual tap-dancer may be added for dancing on the table) or by the movement of the object (e.g. Cinderella in a swing or in a carousel).

It is to be understood that although preferred embodiments, specific constructions and configurations, have been discussed herein for devices applying to the present invention, various changes or modifications in form and detail may be made without departing from the scope and spirit of this invention. Depending on the application, the order of the different steps may be changed and certain steps may be omitted.

It is also to be understood that each time the term "circuit is used, this does not mean that the invention is limited to embodiments, in which video processing is done by electronic circuitry. As is well known by the skilled person in the art, video processing can be performed by one or more circuits but also by a computer, running the necessary software and such embodiments are also part of the present invention. It is thus also to be understood that by the word "means", when used in the description and in the claims, is meant one or more circuits or a computer or processor, driven by the necessary software.

## Claims

1. A method for producing a video product regarding an individual, the video product being based on at least one video sequence, each video sequence comprising one or more sub-sequences of images, the method comprising:
- detecting and storing an identification or a corresponding code (ID) of the individual, based on data which remain the same for all video sequences
- determining track information, linked with the identification (ID) and valid for all sub-sequences within a given video sequence
- shooting and storing sub-sequences of images of the individual
- mounting the sub-sequences of images corresponding to a single track information into a video sequence and labelling the video sequence with the identification or corresponding code (ID)
- mounting video sequences of images having the first identification into the video product.

2. The method according to claim 1 whereby the identification is based on facial recognition.

3. The method according to any of the previous claims, whereby video sequences are analyzed and given a score, based on that analysis.

4. The method of claim 3, whereby video sequences are selected on the basis on the given score.

5. The method according to any of the previous claims, whereby sequences are further analyzed for particular information.

6. The method according to any of the previous claims, whereby virtual content is selected and added based on the results of the analysis for particular information.

7. A video product, obtained by applying the method of any previous claim.

8. A computer software product, which, when loaded on a computer, makes the computer execute the method according to any of the claims 1 to 6.

9. A system for producing a video product on an individual moving around in one or more locations, the system comprising:
- a video capturing and recording system (100, 200), each video capturing and recording system comprising:
a detector for detecting the face of the individual and for detecting identification features of the individual, storing means for storing the identification features or a corresponding code,
means for determining track information regarding the individual and in relation to the location,
one or more cameras (120) for shooting one or more sub-sequences of images of the individual on the basis of the track information,
means for putting the sub-sequences of images together into a sequence of images,
means for labelling the sequence of images with the identification of the individual.

10. A system according to claim 9, the system further comprising:
- a video combining system (500) comprising:
a detector for detecting the face of an individual and for detecting identification features of the individual,
means for retrieving among the available sequences of images the sequences of images, labelled with the identification of the individual.

11. A system according to any of the claims 9 or 10, whereby each video capturing and recording system comprises further a means for analyzing the sequences for particular characteristics and a circuit for labelling the sequences with a score, based on the results of this analysis.

12. A system according to any of the claims 10 or 11, whereby the video combining system (500) further comprises means for selecting sequences on the basis on their score.

13. A system according to any of the claims 10 to 12, whereby the video combining system (500) further comprises means for analyzing the sequences for particular information.

14. A system according to claim 13, whereby the video combining system (500) further comprises means for selecting and adding virtual content to one or more sequences, based on the presence of particular information.
